# EUROPÄISCHE PATENTSCHRIFT

(11) **EP 3 596 575 B1**
(45) Veröffentlichungstag und Bekanntmachung des Hinweises auf die Patenterteilung: **15.03.2023**
(21) Anmeldenummer: 18713577.7
(22) Anmeldetag: 13.03.2018
(51) Int. Cl.: G05G 1/10, B60K 37/06

(54) **MANUELL BETÄTIGBARES ABNEHMBARES BEDIENELEMENT**
MANUALLY OPERATED DETACHABLE CONTROL ELEMENT
ÉLÉMENT DE COMMANDE MANUELLE DÉTACHABLE

(30) Priorität: 15.03.2017 DE 102017105461
(43) Veröffentlichungstag der Anmeldung: 22.01.2020
(73) Patentinhaber: KOSTAL Automobil Elektrik GmbH & Co. KG, 58513 Lüdenscheid (DE)
(72) Erfinder: KARA, Cem, 44309 Dortmund (DE)
(74) Vertreter: Kerkmann, Detlef
(86) Internationale Anmeldenummer: PCT/EP2018/056175
(87) Internationale Veröffentlichungsnummer: WO 2018/167023

(56) Entgegenhaltungen:
- DE-A1-102015 221 927
- DE-A1-102016 003 054
- ES-A1- 2 539 417
- GB-A- 2 525 036
- JP-A- 2001 277 902

## Beschreibung

Die Erfindung betrifft ein manuell betätigbares Bedienelement zum Ansteuern einer oder mehrerer Einrichtungen mit einem Basismodul und mit einem mit dem Basismodul verbindbaren Aufsatzmodul.

Manuell betätigbare Bedienelemente zum Ansteuern eines oder mehrerer Aktoren werden u.a. in Kraftfahrzeugen eingesetzt. Betätigt werden durch derartige Bedienelemente verschiedene Einrichtungen im Fahrzeug, wie beispielsweise eine Audioanlage, ein Navigationsgerät, die Innenbeleuchtung, nur um einige Beispiele zu nennen. Derartige Bedienelemente sind als Schalter, durchaus auch mit mehreren Schaltrichtungen und somit nach Art eines Joysticks oder auch als Drehsteller konzipiert und können modular aufgebaut sein. Im Falle eines modularen Aufbaus umfassen derartige Bedienelemente ein Basismodul und ein Aufsatzmodul. Das Aufsatzmodul ist mit dem Basismodul verbindbar und ist mit diesem mechanisch in Eingriff gestellt. In aller Regel ist eine dauerhafte Verbindung zwischen dem Aufsatzmodul und dem Basismodul angestrebt. Aufgrund der Modularität können bei diesem Konzept auf ein und dasselbe Basismodul unterschiedliche Aufsatzmodule aufgesetzt werden, die sich beispielsweise durch ihr Design oder auch ihre Funktionalität unterscheiden können. Dieses bringt Vorteile bei der Herstellung. Bei diesen Bedienelementen beinhaltet das Basismodul die zum Ansteuern der einen oder mehreren Einrichtungen notwendigen elektrischen/elektronischen Baugruppen zum Erzeugen eines Ansteuersignals bei einer Betätigung des Bedienelementes. Das Aufsatzmodul braucht grundsätzlich keine eigenen elektrischen/elektronischen Komponenten zu halten. Dies ist jedoch durchaus möglich.

Bei modular aufgebauten Bedienelementen der vorbeschriebenen Art besteht mitunter auch die Möglichkeit, ein erstes Aufsatzmodul durch ein anderes zu ersetzen, beispielsweise, wenn dem Bedienelement eine andere Funktionalität zugeteilt wird oder wenn mit dem Bedienelement weitere oder auch andere als ursprünglich vorgesehene Funktionen geschaltet werden sollen. Im Zuge einer zunehmend gewünschten nutzerseitigen Individualisierung besteht auch der Wunsch, ein Aufsatzmodul auf einfache Weise von dem Basismodul trennen und durch ein anderes austauschen zu können.

Die DE 10 2016 003 054 A1, welche den Oberbegriff des Anspruchs 1 offenbart, zeigt eine manuell betätigbare Bedieneinheit, die ein Bedienpaneel und ein Bedienelement aufweist, wobei in zwei unterschiedlichen Ausführungsformen das Bedienelement einmal mittels eines . Rastmechanismus an dem Bedienpaneel lösbar befestigbar ist, wogegen das Bedienelement in der anderen Ausführung mittels zweier Magnetringe an dem Bedienpaneel lösbar befestigbar ist. Die eine Ausführungsform funktioniert also rein mechanisch mit beweglichen Komponenten, während die andere rein magnetisch ohne bewegliche Komponenten funktioniert. Die DE 10 2015 221 927 A1 zeigt einen Drehsteller für ein Fahrzeug, der ein Basismodul und ein gegenüber diesem Basismodul verschiebbar angebrachtes Bedienmodul aufweist.

Der Erfindung liegt daher die Aufgabe zugrunde, ein modular aufgebautes manuell betätigbares Bedienelement vorzuschlagen, bei dem das Aufsatzmodul in einfacher Weise mit dem Basismodul verbunden, beispielsweise für einen Austausch oder eine separate Benutzung wieder entfernt und auch wieder mit dem Basismodul verbunden werden kann. Die Verbindung soll somit ohne Beeinträchtigung hinsichtlich der Qualität der Verbindung oftmaligen Verbindungs- und Lösungsvorgängen unterworfen werden können.

Gelöst wird diese Aufgabe erfindungsgemäß durch ein eingangs genanntes, gattungsgemäßes Bedienelement, bei dem das Basismodul eine erste mechanische Anschlusskontur und das Aufsatzmodul eine mit der ersten Anschlusskontur in Eingriff stellbare zweite Anschlusskontur aufweist, wobei die Anschlusskontur entweder des Basismoduls oder des Aufsatzmoduls als Eingriffskontur ausgelegt ist und diese Teil eines zwischen einer Sperrstellung und einer Nicht-Sperrstellung beweglichen Sperrelementes ist, und dass dem nicht das Sperrelement aufweisende Modul ein Haltemagnet und dem beweglichen Sperrelement ein durch die Magnetkraft des Haltemagneten anziehbares Komplementärelement zugehörig sind, damit bei zusammengeführten Modulen das Sperrelement gegen die Kraft eines Rückstellelementes mit der Anschlusskontur des anderen Moduls in Eingriff gestellt wird.

Bei diesem Bedienelement verfügt das Basismodul über eine erste Anschlusskontur. Diese bildet eine Verriegelungskontur für das Aufsatzmodul. Das Aufsatzmodul verfügt über eine zweite Anschlusskontur, die mit der ersten Anschlusskontur des Basismoduls in Eingriff stellbar ist. Eines der beiden Module - Basismodul oder Aufsatzmodul - umfasst ein zwischen einer Sperrstellung und einer Nicht-Sperrstellung bewegliches Sperrelement. Durch das Sperrelement wird eine Eingriffskontur zum Verbinden der beiden Module bereitgestellt. In der Sperrstellung des Sperrelementes steht seine Eingriffskontur im Eingriff mit der Anschlusskontur des anderen Moduls, und zwar dann, wenn das Aufsatzmodul auf das Basismodul aufgesetzt ist. Ist das Aufsatzmodul von dem Basismodul getrennt, befindet sich das Sperrelement in seiner zurückgezogenen Nicht-Sperrstellung. In dieser Stellung kann das Sperrelement, wenn gewünscht, bündig mit der angrenzenden Oberfläche des jeweiligen Moduls angeordnet sein. Dann steht diese Eingriffskontur nicht hervor. Um die Sperrkinematik zu bewirken, ohne dass diese von einem Nutzer aktiv ausgelöst wird, verfügt das nicht das bewegliche Sperrelement aufweisende Modul über einen Haltemagneten. Das Sperrelement des anderen Moduls trägt ein durch die Magnetkraft des Haltemagneten anziehbares Komplementärelement. Hierbei kann es sich um einen zweiten Magneten handeln, der bezüglich seiner Polung gleichsinnig zu der Polung des Haltemagneten in dem Sperrelement angeordnet ist. Das Komplementärelement kann auch ein Körper mit ferromagnetischen Eigenschaften sein. Das Sperrelement ist typischerweise translatorisch bewegbar geführt, um aus seiner Sperrstellung in seine Nicht-Sperrstellung und umgekehrt bewegt werden zu können. Sind die Module nicht aneinander angeschlossen, befindet sich das Sperrelement in seiner Nicht-Sperrstellung. In dieser ist das Sperrelement durch die Kraft eines Rückstellelementes gehalten. Bei einem solchen Rückstellelement kann es sich um eine Rückstellfeder oder ein anderes aufgrund einer elastischen Deformation auf das Sperrelement eine Rückstellkraft ausübendes Element handeln. In einer anderen Ausgestaltung ist vorgesehen, dass die auf das Sperrelement wirkende Rückstellkraft durch einen Rückstellmagneten bereitgestellt wird. Auch kombinierte Rückstelleinrichtungen sind möglich. Ausgenutzt wird bei einem Rückstellmagneten, dass das Sperrelement ohnehin ein auf Magnetkraft reagierendes Komplementärelement beinhaltet. Wird zur Bereitstellung der Rückstellkraft ein Rückstellmagnet eingesetzt, ist dessen auf das Komplementärelement wirkende Magnetkraft geringer als die von dem Haltemagneten des anderen Moduls auf das Komplementärelement wirkende Magnetkraft.

Bei dem vorbeschriebenen Konzept wird die Magnetkraft des Haltemagneten nicht nur genutzt, um das Sperrelement in seine in die Anschlusskontur eingreifende Sperrstellung zu verstellen, sondern auch um die beiden Module aneinander zu befestigen. Somit wird in geschickter Weise die Magnetkraft des Haltemagneten nicht nur für die Verstellung des Sperrelementes und damit zur Herbeiführung eines Formschlusses, sondern auch zur Fixierung des Aufsatzmoduls am Basismodul genutzt. Der vorbeschriebene Magnetverschluss zum Befestigen der beiden Module mitein-ander ist nicht nur dauerhaft, sondern kann quasi unzählige Male gelöst und wieder hergestellt werden, ohne dass im Gegensatz zu mechanischen Verbindungsmitteln, wie beispielsweise Clipsverbindungen eine Beeinträchtigung der Haltekräfte zu befürchten wäre.

Die Haltekraft, mit der die beiden Module durch die Magnetkraft aneinander befestigt sind, kann dadurch gesteigert werden, dass das Komplementärelement des Sperrelementes als Komplementärmagnet ausgelegt ist und dass auch die Rückstellkraft zum Verstellen des Sperrelementes aus seiner Sperrstellung in seiner Nicht-Sperrstellung aus einem Rückstellmagneten resultiert. Bei einer solchen Ausgestaltung sind die drei Magnete gleichsinnig zueinander angeordnet mit dem Ergebnis, dass die Magnetkraft des Haltemagneten ebenfalls auf den Rückstellmagneten und somit auf zwei in Verstellrichtung hintereinanderliegende Magnete wirkt. Entsprechend höher ist die Haltekraft und dementsprechend auch die zum Lösen des Aufsatzmoduls von dem Basismodul erforderliche Kraft.

Der Haltemagnet ist typischerweise ein Permanentmagnet, damit sichergestellt ist, dass das Aufsatzmodul dauerhaft und auch bei Stromausfall an dem Basismodul gehalten ist.

Mit diesem modularen Aufbau eines elektrischen Bedienelementes kann das Aufsatzmodul ohne weiteres von dem Basismodul getrennt und wenn gewünscht, durch ein anderes ersetzt werden. Aufgrund des problemlosen Verbindens des Aufsatzmoduls mit dem Basismodul besteht auch die Möglichkeit, das Aufsatzmodul als intelligentes Aufsatzmodul auszulegen, in dem sodann die für eine Ansteuerung der gewünschten Einrichtung notwendigen elektrischen/elektronischen Komponenten enthalten sind. Bei einer solchen Ausgestaltung dient das Basismodul vornehmlich zur Halterung des Aufsatzmoduls und kann, wenn entsprechend ausgelegt, über zusätzliche eigene Funktionalitäten verfügen, wenn das Aufsatzmodul an das Basismodul angeschlossen ist. Das Aufsatzmodul kann dann nach Art einer Fernbedienung benutzt werden.

Bei einem intelligenten Aufsatzmodul kann es sich beispielsweise auch um ein nutzerseitig vorhandenes Bedienteil, beispielsweise ein Mobiltelefon handeln, wenn dieses mit einer Anschlusskontur der vorbeschriebenen Art ausgerüstet ist oder wenn dieses in eine eine solche Anschlusskontur aufweisende Schale eingesetzt ist.

In einem Ausführungsbeispiel eines solchen Bedienelementes ist vorgesehen, dass das Basismodul als Anschlusskontur eine Anschlussmulde aufweist. Bei einer solchen Ausgestaltung ist dem Aufsatzmodul das bewegliche Sperrelement zugeordnet. Befindet sich das Basismodul des Bedienteils beispielsweise in der Mittelkonsole eines Fahrzeuges, ist das Aufsatzmodul, wenn mit dem Basismodul in Eingriff gestellt und somit das Sperrelement in die Anschlussmulde eingreift, formschlüssig in Fahrtrichtung und in Querrichtung dazu an das Basismodul angeschlossen. Dabei ist typischerweise die Eingriffskontur des Sperrelementes ausgelegt, damit sich diese an der Innenwand der Anschlussmulde des Basismoduls abstützt. Das Aufsatzmodul ist somit in der Querebene zur Verstellrichtung des Sperrelementes an das Basismodul unverrückbar und somit spielfrei oder quasi spielfrei angeschlossen. Durch die Kraft des Haltemagneten wird das Anschlussmodul auch bei Vorhandensein von Spiel positionsgenau gehalten. Das Eingreifen der Eingriffskontur des Sperrelementes in die Anschlussmulde des Basismoduls dient nur einer größeren Sicherheit, dass auch bei abrupten Beschleunigungen oder Verzögerungen das Anschlussmodul sicher an dem Basismodul befestigt bleibt. Die Kraft des Haltemagneten wird allein für das Halten des Anschlussmoduls am Basismodul benötigt. In Halterichtung, die typischerweise auch der Bewegungsrichtung des Sperrelementes des Aufsatzmoduls entspricht, entfaltet der Haltemagnet seine größte Magnetkraft. Daher braucht dieser nicht übermäßig groß ausgelegt zu werden, um die gewünschte und erforderliche Haltekraft für das Aufsatzmodul bereitzustellen. Genutzt wird bei diesem Konzept der magnetomechanische Eingriff des Sperrelementes in die Anschlussmulde. Bei einer Ausgestaltung, bei der das Komplementärelement ebenso wie das Rückstellelement als Permanentmagneten ausgeführt sind, ist es ausreichend, wenn es sich hierbei um Scheibenmagnete handelt. Die Magnetkraft des Haltemagneten kann durch eine Verwendung von mehr als einem Scheibenmagneten entsprechend vergrößert werden.

Die in die Anschlussmulde eingreifende Sperrkontur des Sperrelementes braucht nicht notwendigerweise umfänglich an der Innenwand der Anschlussmulde anzuliegen, um einen verrückfreien Eingriff zu erzielen. Dieses lässt sich auch durch eine kreuzförmige Eingriffskontur realisieren. In vielen Fällen wird man jedoch die Kontur der Anschlussmulde durch die Eingriffskontur des Sperrelementes ausfüllen, sodass diese Eingriffskontur eine komplementäre Querschnittsfläche zu der Anschlussmulde aufweist. Eine solche Ausgestaltung eignet sich, um oberhalb eines Bodens des Sperrelementes einen Scheibenmagneten anzuordnen, durch den die gesamte zur Anschlussmulde weisende Seite des Sperrelementes für die von dem Haltemagneten ausgehende Magnetkraft empfänglich ist. Aus demselben Grund ist es zweckmäßig, unterhalb eines Bodens den als Scheibenmagnet ausgelegten Haltemagneten anzuordnen. Die vorgenannten Böden brauchen nur eine geringe Materialstärke aufzuweisen und können durchaus eine Materialstärke von weniger als 1 mm haben. Diese dienen zur Halterung und zur Verblendung der Magnete.

Ist ein nicht orientiertes Anschließen des Aufsatzmodules an das Basismodul gewünscht, kann die Anschlussmulde eine kreisförmige Querschnittsgeometrie aufweisen.

In einer Weiterbildung ist vorgesehen, dass die Anschlussmulde zumindest einen hinterschnittenen Innenwandbereich aufweist. Das Sperrelement verfügt dann zusätzlich zu seiner vorbeschriebenen Eingriffskontur über ein in seiner Sperrstellung in den Hinterschnitt eingreifendes Sperrglied, so dass das Anschlussmodul auch in Abziehrichtung formschlüssig an das Basismodul angeschlossen ist.

Nachfolgend ist die Erfindung anhand eines Ausführungsbeispiels unter Bezugnahme auf die beigefügten Figuren beschrieben. Es zeigen:

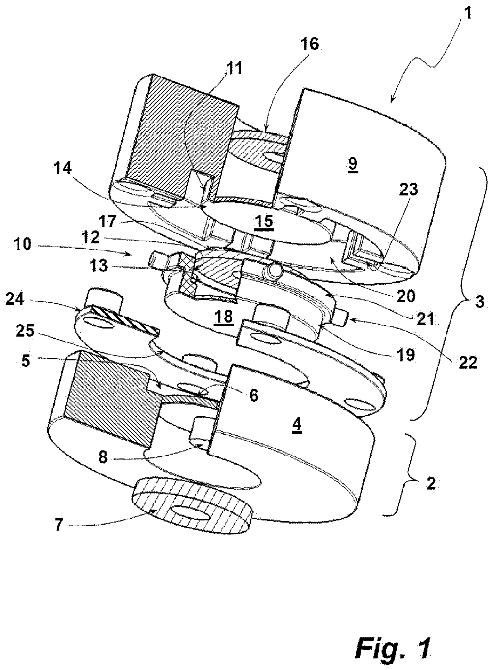

- **Fig. 1:**: Eine perspektivische, zum Teil geschnittene Darstellung einer Verriegelungseinrichtung zum Verbinden eines Basismoduls mit einem Aufsatzmodul eines Bedienelementes nach Art einer Explosionsdarstellung,
- **Fig. 2:**: die Verriegelungseinrichtung der Figur 1 in einer teilgeschnittenen perspektivischen Darstellung (links) und in einer Teilansicht (rechts) in einer ersten Stellung und
- **Fig. 3:**: die Verriegelungseinrichtung der Figur 1 in einer teilgeschnittenen perspektivischen Darstellung (links) und in einer Teilansicht (rechts) in einer weiteren Stellung.

Ein im Übrigen nicht näher dargestelltes Bedienteil 1 zum Ansteuern von Einrichtungen in einem Fahrzeug umfasst ein Basismodul 2 und ein als Bedienmodul ausgelegtes Aufsatzmodul 3. In der Figur dargestellt sind bezüglich des Basismoduls 2 sowie bezüglich des Aufsatzmoduls 3 nur die zur In-Eingriffstellung der beiden Module 2, 3 miteinander notwendigen Elemente. Die in den Figuren gezeigten Verriegelungselemente sind somit Teil des ansonsten nicht näher dargestellten Moduls. Das Basismodul 2 ist bei dem dargestellten Ausführungsbeispiel Teil eines in nicht näher dargestellter Art und Weise rotatorisch gelagerten Körpers 4. Als Anschlusskontur verfügt das Basismodul 2 über eine Anschlussmulde 5 mit kreisförmiger Querschnittsgeometrie. Unterhalb eines Bodens 6 der Anschlussmulde 5 befindet sich ein als Permanentmagnet ausgelegter Haltemagnet 7, der auf einem Magnethaltezapfen 8 sitzt.

Das Aufsatzmodul 3 umfasst ein Gehäuse 9, in dem translatorisch verstellbar ein Sperrelement 10 geführt ist. Geführt ist das Sperrelement 10 an einer zylindrischen Sperrelementführung 11 des Gehäuses 9, die mit einer komplementären zylindrischen Innenwand 12 des Sperrelementes 10 zu dessen Führung zusammenwirkt. Die Innenwand 12 weist einen nach innen vorspringenden Absatz 13 auf. Dieser dient als Anschlag, der mit dem unteren Abschluss 14 der Sperrelementführung 11 zusammenwirkt. Die Sperrelementführung 11 ist unterseitig durch einen Boden 15 verschlossen. Dieser trägt ebenso wie der Boden 6 des Basismoduls 2 einen nach oben abragenden, in der Figur nicht erkennbaren Magnethaltezapfen, auf dem bei dem dargestellten Ausführungsbeispiel ein Rückstellmagnet 16 angeordnet ist.

In dem von dem Absatz 13 eingefassten Innenbereich des Sperrelementes 10 ist ein Komplementärmagnet angeordnet. Dieser liegt auf dem Boden 18 des Sperrelementes 10 auf und ist wiederum durch einen in der Figur nicht erkennbaren Magnethaltezapfen gehalten. Die radial äußere Wand 19 im Bereich des Absatzes 13 stellt die Eingriffskontur des Sperrelementes 10 dar, mit der sich diese an der Innenwand der Anschlussmulde 5 des Basismoduls 2 abstützt, wenn das Aufsatzmodul 3 mit dem Basismodul 2 verbunden ist.

Das Sperrelement 10 ist innerhalb des Gehäuses 9 in einer ringförmigen Sperrelementaufnahme 20 gehalten. An die Wand 19 ist ein in radialer Richtung auskragender Wandabschnitt 21 angeformt. An diesem sind vier Führungszapfen 22 angeordnet, die in komplementäre Zapfenführungen 23 des Gehäuses 9 eingreifen. Der auskragende Wandabschnitt bildet mit seiner Unterseite einen Anschlagflansch aus. Unterseitig verschlossen ist das Gehäuse 9 des Aufsatzmoduls 3 durch eine ringförmige Verschlussplatte 24. Durch die Ringform der Verschlussplatte 24 ist ein Sperrelementdurchlass 25 bereitgestellt, durch den das Sperrelement 10 mit seiner umlaufenden Wand 19 hindurch passt. Mit der Oberseite der Verschlussplatte 24 wirkt die als Anschlag dienende Unterseite des Wandabschnittes 21 zum Begrenzen der Bewegung des Sperrelementes 10 zusammen.

Die drei Magnete 7, 16 und 17 sind als Ringscheibenmagnete ausgeführt und bezüglich ihrer Polung gleichsinnig zueinander angeordnet.

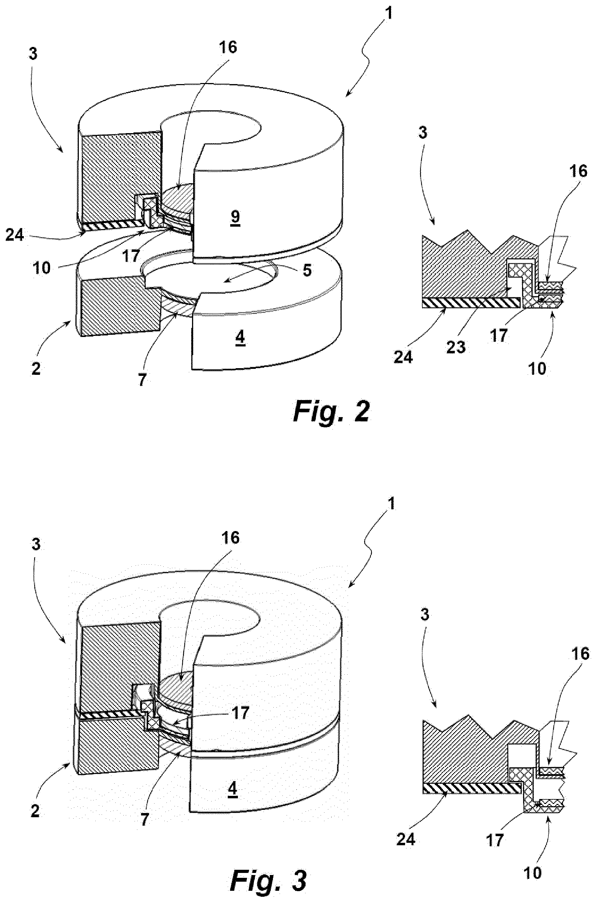

Figur 2 zeigt das Bedienelement 1 mit von dem Basismodul 2 getrenntem Aufsatzmodul 3. Aufgrund der gleichsinnigen Polung des Rückstellmagneten 16 zu dem Komplementärmagneten 17 des Sperrelementes 10 wird der Komplementärmagnet 17 von dem Rückstellmagneten 16 angezogen, sodass sich das Sperrelement 10 in seiner Nicht-Sperrstellung befindet. In dieser Stellung ist das Sperrelement 10 in dem Gehäuse 9 des Aufsatzmoduls 3 aufgenommen. Der Boden 18 des Sperrelementes 10 schließt bündig mit der Unterseite der scheibenförmigen Verschlussplatte 24 ab. Diese Anordnung des Sperrelementes 10 bezüglich des Gehäuses 9 des Aufsatzmoduls 3 ist schematisiert in der vergrößerten Ansichtsdarstellung gezeigt. Aufgrund der zwischen dem Rückstellmagneten 16 und dem Komplementärmagneten 17 herrschenden magnetischen Anziehungskräfte ist diese Stellung des Sperrelementes 10 fixiert. Das Aufsatzmodul 3 kann, ohne dass das Sperrelement 10 störend wäre, beliebig gehandhabt werden.

Die Magnetkraft des Haltemagneten 7 ist größer als diejenige des Rückstellmagneten 16. Aus diesem Grunde wird der Komplementärmagnet 17 des Sperrelementes 10 von dem Haltemagneten 7 angezogen, sobald das Aufsatzmodul 3 auf das Basismodul 2 aufgesetzt ist. Diese Stellung der beiden Module 2, 3 zueinander ist in Figur 3 gezeigt. Aufgrund der höheren magnetischen Anziehungskräfte des Haltemagneten 7 wird der Komplementärmagnet 17 zu dem Haltemagneten 7 hingezogen, wodurch das Sperrelement 10 mit seiner als Eingriffskontur dienenden umlaufenden Wand 19 in die Anschlussmulde 5 eingezogen wird. In dieser in Figur 3 gezeigten Sperrstellung des Sperrelementes 10 ist das Anschlussmodul 3 formschlüssig in Querrichtung zur translatorischen Verstellbewegung des Sperrelementes 10 an das Basismodul 2 angeschlossen. Der Durchmesser der umlaufenden Wand 19 als Eingriffskontur des Sperrelementes 10 ist komplementär zu der Innenwandkontur der Anschlussmulde 5 ausgeführt. Daher ist das Aufsatzmodul 3, wenn an das Basismodul 2 angeschlossen, quasi spielfrei an dem Basismodul 2 in der Querebene zur Verstellrichtung des Sperrelementes 10 befestigt. Durch die Anziehungskraft des Haltemagneten 7, die nicht nur auf den Komplementärmagneten 17, sondern auch auf den Rückstellmagneten 16 wirkt, ist das Aufsatzmodul 2 mit entsprechender Magnetkraft an das Basismodul angeschlossen.

Zum Lösen des Aufsatzmoduls 3 von dem Basismodul 2 wird dieses schlichtweg ergriffen und von dem Basismodul 2 abgezogen. Sind die beiden Module 2, 3 voneinander getrennt, wird der Komplementärmagnet 17 des Sperrelementes 10 von dem im Gehäuse 9 befindlichen Rückstellmagneten 16 angezogen und in seine in dem Gehäuse 9 befindliche Nicht-Sperrstellung gebracht.

In einer Ausgestaltung eines solchen Bedienelementes ist vorgesehen, dass das Aufsatzmodul ein Bedienmodul ist und, wenn mit dem Basismodul in Eingriff gestellt, als Drehsteller konzipiert ist, wobei das Aufsatzmodul sämtliche für eine Steuersignalerzeugung notwendige, insbesondere elektrische/elektronische Komponenten beinhaltet. Zudem verfügt bei diesem Ausführungsbeispiel das Aufsatzmodul über eine Datenübertragungsstrecke, über die die anzusteuernde Einrichtung durch eine Betätigung des Aufsatzmoduls unabhängig von dem Basismodul möglich ist. Bei dieser Datenübertragungsstrecke kann es sich beispielsweise um eine Infrarotstrecke handeln, die ergänzt werden kann mit einer Funkübertragungsstrecke. Bei diesem Bedienelement kann das Bedienmodul - das Aufsatzmodul - von dem Basismodul abgenommen und freihändig zum Ansteuern der gewünschten Einrichtung betätigt werden.

Die Erfindung ist anhand von Ausführungsbeispielen beschrieben worden. Ohne den Umfang der geltenden Ansprüche zu verlassen, ergeben sich für einen Fachmann zahlreiche weitere Möglichkeiten, die Erfindung auszuführen, ohne dass dieses im Rahmen dieser Ausführungen detailliert erläutert werden müsste.

### Bezugszeichenliste

- 1: Bedienelement
- 2: Basismodul
- 3: Aufsatzmodul
- 4: Körper
- 5: Anschlussmulde
- 6: Boden
- 7: Haltemagnet
- 8: Magnethaltezapfen
- 9: Gehäuse
- 10: Sperrelement
- 11: Sperrelementführungen
- 12: Innenwand
- 13: Absatz
- 14: Abschluss
- 15: Boden
- 16: Rückstellmagnet
- 17: Komplementärmagnet
- 18: Boden
- 19: Wand
- 20: Sperrelementaufnahme
- 21: Wandabschnitt
- 22: Führungszapfen
- 23: Zapfenführung
- 24: Verschlussplatte
- 25: Sperrelementdurchlass

## Patentansprüche

1. Manuell betätigbares Bedienelement zum Ansteuern einer oder mehrerer Einrichtungen mit einem Basismodul (2) und mit einem mit dem Basismodul (2) verbindbaren Aufsatzmodul (3), wobei das Basismodul (2) eine erste mechanische Anschlusskontur und das Aufsatzmodul (3) eine mit der ersten Anschlusskontur in Eingriff stellbare zweite Anschlusskontur aufweist, wobei die Anschlusskontur entweder des Basismoduls (2) oder des Aufsatzmoduls (3) als Eingriffskontur (19) ausgelegt ist und diese Teil eines zwischen einer Sperrstellung und einer Nicht-Sperrstellung beweglichen Sperrelementes (10) ist, **dadurch gekennzeichnet, dass** dem nicht das Sperrelement (10) aufweisende Modul (2) ein Haltemagnet (7) und dem beweglichen Sperrelement (10) ein durch die Magnetkraft des Haltemagneten (7) anziehbares Komplementärelement (17) zugehörig sind, damit bei zusammengeführten Modulen (2, 3) das Sperrelement (10) des einen Moduls (3) gegen die Kraft eines Rückstellelementes (16) mit der Anschlusskontur des anderen Moduls (2) in Eingriff gestellt wird.

2. Bedienelement nach Anspruch 1, **dadurch gekennzeichnet, dass** das Komplementärelement ein Körper mit ferromagnetischen Eigenschaften oder ein Komplementärmagnet (17) ist, dessen zu dem Haltemagnet (7) weisende Seite gegenpolig zu der zu dem Komplementärmagneten (17) weisenden Seite des Haltemagneten (7) ist.

3. Bedienelement nach Anspruch 1 oder 2, **dadurch gekennzeichnet, dass** als Rückstellelement eine Rückstellfeder vorgesehen ist.

4. Bedienelement nach Anspruch 1 oder 2, **dadurch gekennzeichnet, dass** zum Bereitstellen der Rückstellkräfte für das Sperrelement (10) ein bezüglich seiner Polung gleichsinnig zu der Polung des Haltemagneten (7) orientiert angeordneter Rückstellmagnet (16) vorgesehen ist, dessen auf das Komplementärelement (17) wirkende Magnetkraft geringer ist als die von dem Haltemagneten (7) auf das Komplementärelement (17) wirkende Magnetkraft.

5. Bedienelement nach einem der Ansprüche 1 bis 4, **dadurch gekennzeichnet, dass** der Haltemagnet (7) ein Permanentmagnet oder eine Permanentmagnetanordnung ist.

6. Bedienelement nach einem der Ansprüche 1 bis 5, **dadurch gekennzeichnet, dass** die Anschlusskontur des Basismoduls (2) eine Anschlussmulde (5) ist, an deren Innenwand die Eingriffskontur (19) des Sperrelementes (10) des Aufsatzmoduls (3) bei miteinander verbundenen Modulen (2, 3) abgestützt ist.

7. Bedienelement nach Anspruch 6, **dadurch gekennzeichnet, dass** die Anschlussmulde (5) eine kreisförmige Querschnittsgeometrie aufweist.

8. Bedienelement nach Anspruch 6 oder 7, **dadurch gekennzeichnet, dass** die Eingriffskontur (19) mit einer zu der Querschnittsgeometrie der Anschlussmulde (5) komplementären Kontur ausgeführt ist.

9. Bedienelement nach einem der Ansprüche 6 bis 8, **dadurch gekennzeichnet, dass** der Haltemagnet (7) unterhalb eines Bodens (6) der Anschlussmulde (5) sitzt.

10. Bedienelement nach einem der Ansprüche 1 bis 9, **dadurch gekennzeichnet, dass** das Sperrelement (10) eine umlaufende, die Eingriffskontur (19) bereitstellende Wand aufweist, in die zur Führung des Sperrelementes (10) eine Sperrelementführung (11) eingreift und die Innenseite der umlaufenden Wand oder einen Abschnitt derselben in Verstellrichtung des Sperrelementes (10) an der Außenseite der Sperrelementführung (11) geführt ist.

11. Bedienelement nach Anspruch 10, **dadurch gekennzeichnet, dass** die umlaufende Wand des Sperrelementes (10) einen die Eingriffskontur (19) unterseitig abschließenden Boden (18) aufweist, auf dem das Komplementärelement (17) angeordnet ist.

12. Bedienelement nach Anspruch 6 oder einem der Ansprüche 7 bis 11, soweit auf Anspruch 6 rückbezogen, **dadurch gekennzeichnet, dass** die Anschlussmulde zumindest einen hinterschnittenen Innenwandabschnitt und das Sperrelement zusätzlich zu seiner Eingriffskontur ein in den Hinterschnitt der Innenwand des Basismoduls eingreifendes Sperrglied aufweist, das in den Hinterschnitt eingreift, wenn die Eingriffskontur des Sperrelementes in die Anschlussmulde eingreift.

13. Bedienelement nach Anspruch 12, **dadurch gekennzeichnet, dass** das Sperrglied zwischen einer Nicht-Sperrstellung und einer Sperrstellung, in der das Sperrglied in den Hinterschnitt der Innenwand der Anschlussmulde des Basismoduls eingreift, verstellbar ist.

14. Bedienelement nach einem der Ansprüche 1 bis 13, **dadurch gekennzeichnet, dass** dieses ein Bedienelement (1) für ein Fahrzeug, insbesondere ein Kraftfahrzeug, ist.

15. Bedienelement nach Anspruch 14, **dadurch gekennzeichnet, dass** dieses als Drehsteller konzipiert ist, bei dem das Aufsatzmodul ein Bedienmodul mit sämtlichen für eine Steuersignalerzeugung notwendigen elektrischen/elektronischen Komponenten ist und das Aufsatzmodul über eine Datenübertragungsstrecke verfügt, über die die anzusteuernde Einrichtung durch eine Betätigung des Aufsatzmoduls unabhängig von dem Basismodul möglich ist.

## Claims

1. Manually operable operating element for controlling one or more devices, having a base module (2) and having a top module (3) which can be connected to the base module (2), the base module (2) having a first mechanical connection contour and the top module (3) having a second connection contour which can be engaged with the first connection contour, wherein the connection contour of either the base module (2) or the add-on module (3) is designed as an engagement contour (19) and this is part of a locking element (10) which is movable between a locking position and a non-locking position, **characterised in that** a holding magnet (7) is associated with the module (2) not having the locking element (10) and a complementary element (17), which can be attracted by the magnetic force of the holding magnet (7), is associated with the movable locking element (10), so that, when the modules (2, 3) are brought together, the locking element (10) of one module (3) is brought into engagement with the connection contour of the other module (2) against the force of a restoring element (16).

2. Operating element according to claim 1, **characterised in that** the complementary element is a body with ferromagnetic properties or a complementary magnet (17) whose side facing the holding magnet (7) is of opposite polarity to the side of the holding magnet (7) facing the complementary magnet (17).

3. Operating element according to claim 1 or 2, **characterised in that** a return spring is provided as a return element.

4. Operating element according to claim 1 or 2, **characterised in that**, in order to provide the restoring forces for the locking element (10), a restoring magnet (16) is provided which is arranged oriented in the same direction as the polarity of the holding magnet (7) with respect to its polarity and whose magnetic force acting on the complementary element (17) is lower than the magnetic force acting on the complementary element (17) from the holding magnet (7).

5. Operating element according to any one of claims 1 to 4, **characterized in that** the holding magnet (7) is a permanent magnet or a permanent magnet arrangement.

6. Operating element according to one of the claims 1 to 5, **characterised in that** the connection contour of the base module (2) is a connection trough (5), on the inner wall of which the engagement contour (19) of the locking element (10) of the top module (3) is supported when the modules (2, 3) are connected to one another.

7. Operating element according to claim 6, **characterised in that** the connection recess (5) has a circular cross-sectional geometry.

8. Operating element according to claim 6 or 7, **characterised in that** the engagement contour (19) is designed with a contour complementary to the cross-sectional geometry of the connection trough (5).

9. Operating element according to one of the claims 6 to 8, **characterised in that** the holding magnet (7) is seated below a bottom (6) of the connection trough (5).

10. Operating element according to one of the claims 1 to 9, **characterised in that** the locking element (10) has a circumferential wall which provides the engagement contour (19) and in which a locking element guide (11) engages in order to guide the locking element (10), and the inner side of the circumferential wall or a section of the same is guided on the outer side of the locking element guide (11) in the adjustment direction of the locking element (10).

11. Operating element according to claim 10, **characterised in that** the circumferential wall of the locking element (10) has a base (18) which closes off the engagement contour (19) on the underside and on which the complementary element (17) is arranged.

12. Operating element according to claim 6 or one of the claims 7 to 11, as far as referred back to claim 6, **characterised in that** the connection trough has at least one undercut inner wall section and the locking element has, in addition to its engagement contour, a locking member which engages in the undercut of the inner wall of the base module and which engages in the undercut when the engagement contour of the locking element engages in the connection trough.

13. Operating element according to claim 12, **characterised in that** the locking member is adjustable between a non-locking position and a locking position in which the locking member engages in the undercut of the inner wall of the connection recess of the base module.

14. Operating element according to one of claims 1 to 13, **characterised in that** this is a control element (1) for a vehicle, in particular a motor vehicle.

15. Operating element according to claim 14, **characterised in that** it is designed as a rotary actuator, in which the attachment module is a control module with all the electrical/electronic components necessary for control signal generation and the attachment module has a data transmission path via which the device to be controlled is possible by actuating the attachment module independently of the base module.

## Revendications

1. Elément de commande à actionnement manuel pour commander un ou plusieurs dispositifs avec un module de base (2) et avec un module rapporté (3) pouvant être relié au module de base (2), le module de base (2) présentant un premier contour de raccordement mécanique et le module rapporté (3) présentant un deuxième contour de raccordement pouvant être mis en prise avec le premier contour de raccordement, le contour de raccordement soit du module de base (2) soit du module rapporté (3) étant conçu comme un contour d'engagement (19) et celui-ci faisant partie d'un élément de blocage (10) mobile entre une position de blocage et une position de non-blocage, **caractérisé en ce qu'**un aimant de retenue (7) est associé au module (2) ne comportant pas l'élément de blocage (10) et un élément complémentaire (17) pouvant être attiré par la force magnétique de l'aimant de retenue (7) est associé à l'élément de blocage mobile (10), afin que, lorsque les modules (2, 3) sont réunis, l'élément de blocage (10) d'un module (3) soit mis en prise avec le contour de raccordement de l'autre module (2) contre la force d'un élément de rappel (16).

2. Elément de commande selon la revendication 1, **caractérisé en ce que** l'élément complémentaire est un corps présentant des propriétés ferromagnétiques ou un aimant complémentaire (17) dont le côté orienté vers l'aimant de maintien (7) est de polarité opposée au côté de l'aimant de maintien (7) orienté vers l'aimant complémentaire (17).

3. Elément de commande selon la revendication 1 ou 2, **caractérisé en ce qu'**il est prévu un ressort de rappel comme élément de rappel.

4. Elément de commande selon la revendication 1 ou 2, **caractérisé en ce que**, pour fournir les forces de rappel à l'élément de blocage (10), il est prévu un aimant de rappel (16) dont la polarité est orientée dans le même sens que la polarité de l'aimant de retenue (7) et dont la force magnétique agissant sur l'élément complémentaire (17) est inférieure à la force magnétique agissant sur l'élément complémentaire (17) par l'aimant de retenue (7).

5. Elément de commande selon l'une des revendications 1 à 4, **caractérisé en ce que** l'aimant de maintien (7) est un aimant permanent ou un ensemble d'aimants permanents.

6. Elément de commande selon l'une des revendications 1 à 5, **caractérisé en ce que** le contour de raccordement du module de base (2) est une cuvette de raccordement (5) sur la paroi intérieure de laquelle s'appuie le contour d'engagement (19) de l'élément de blocage (10) du module rapporté (3) lorsque les modules (2, 3) sont reliés entre eux.

7. Elément de commande selon la revendication 6, **caractérisé en ce que** la cuvette de raccordement (5) présente une géométrie de section transversale circulaire.

8. Elément de commande selon la revendication 6 ou 7, **caractérisé en ce que** le contour d'engagement (19) est réalisé avec un contour complémentaire à la géométrie de la section transversale de la cuvette de raccordement (5).

9. Elément de commande selon l'une des revendications 6 à 8, **caractérisé en ce que** l'aimant de maintien (7) est situé en dessous d'un fond (6) de la cuvette de raccordement (5).

10. Elément de commande selon l'une des revendications 1 à 9, **caractérisé en ce que** l'élément de blocage (10) présente une paroi périphérique fournissant le contour d'engagement (19), dans laquelle s'engage un guide d'élément de blocage (11) pour guider l'élément de blocage (10), et la face intérieure de la paroi périphérique ou une section de celle-ci est guidée dans le sens de réglage de l'élément de blocage (10) sur la face extérieure du guide d'élément de blocage (11).

11. Elément de commande selon la revendication 10, **caractérisé en ce que** la paroi périphérique de l'élément de blocage (10) présente un fond (18) fermant le contour d'engagement (19) sur la face inférieure, sur lequel est disposé l'élément complémentaire (17).

12. Elément de commande selon la revendication 6 ou l'une des revendications 7 à 11, dans la mesure où il se rapporte à la revendication 6, **caractérisé en ce que** la cavité de raccordement présente au moins une section de paroi intérieure en contre-dépouille et l'élément de blocage présente, en plus de son contour d'engagement, un organe de blocage s'engageant dans la contre-dépouille de la paroi intérieure du module de base, lequel s'engage dans la contre-dépouille lorsque le contour d'engagement de l'élément de blocage s'engage dans la cavité de raccordement.

13. Elément de commande selon la revendication 12, **caractérisé en ce que** l'organe de blocage est réglable entre une position de non-blocage et une position de blocage dans laquelle l'organe de blocage s'engage dans la contre-dépouille de la paroi intérieure de la cuvette de raccordement du module de base.

14. Elément de commande selon l'une des revendications 1 à 13, **caractérisé en ce qu'**il s'agit d'un élément de commande (1) pour un véhicule, notamment un véhicule automobile.

15. Elément de commande selon la revendication 14, **caractérisé en ce qu'**il est conçu comme un actionneur rotatif, dans lequel le module rapporté est un module de commande avec tous les composants électriques/électroniques nécessaires pour une génération de signaux de commande et le module rapporté dispose d'une liaison de transmission de données par laquelle le dispositif à commander est possible par un actionnement du module rapporté indépendamment du module de base.
